# EUROPEAN PATENT SPECIFICATION

(11) **EP 0 283 316 B1**
(45) Date of publication and mention of the grant of the patent: **18.05.1994**
(21) Application number: 88302420.0
(22) Date of filing: 18.03.1988
(51) Int. Cl.: A01C 3/02, B01F 7/00

(54) **Slurry stirrer**
Schlammrührer
Agitateur à bouillie

(30) Priority: 19.03.1987 GB 8706487; 21.09.1987 GB 8722123
(43) Date of publication of application: 21.09.1988
(73) Proprietor: Elliott, John Swift, Loddiswell near Kingsbridge South Devon (GB)
(72) Inventor: Elliott, John Swift, Loddiswell near Kingsbridge South Devon (GB)

(56) References cited:
- EP-A- 0 055 596
- DE-A- 2 160 410
- DE-A- 2 511 717
- DE-A- 3 136 345
- DE-A- 3 146 692
- DE-A- 3 347 094

## Description

### Field of the Invention

This invention relates to a slurry stirrer, in particular for use in agriculture.

### Background of the Invention

In permanent installations used for animal husbandry, for example in a dairy unit, it is customary to include a pit or tank into which animal waste in the form of slurry is directed and stored. The slurry is withdrawn from the slurry pit from time to time and spread on the fields as fertiliser.

Slurry is a mixture of fibrous organic solid matter and liquid. On storage there is a tendency for the solid and liquid components to separate gradually, the solids typically rising to the top and forming a hard solid fibrous crust on the surface of the slurry.

Slurry is usually removed from the slurry pit by means of a suction pump. The solid crust not only impedes pumping of the liquid slurry from the slurry pit, but if unmixed also leads to an undesirable build-up of solid matter in the pit. Furthermore, if unmixed, the composition of the slurry withdrawn from the slurry pit varies unpredicatably with time. Consequently the slurry is often stirred to mix the solid and liquid components of the slurry prior to and during pumping of slurry from the pit.

The customary form of slurry stirrer comprises a rotatable shaft mounted throughout its length within a fixed tubular housing, one end of the shaft being linkable to a power source such as a rotary power output on a tractor, the other end of the shaft carrying an impeller which on rotation stirs the slurry. The shaft is mounted within the tubular housing on two or more rotary bearings to permit rotation of the shaft within the housing. These bearings may be ball bearings or, for instance, rubber sleeve bearings. The housing may be mounted on the hydraulic lifting mechanism of the tractor to facilitate lowering and raising of the end of the shaft which carries the impeller into and out of the slurry.

This form of slurry stirrer, however, suffers from various disadvantages. The bearing between the shaft and housing at the outer end thereof, i.e. towards the impeller end of the stirrer, inevitably comes into contact with the slurry during use. The solid/liquid slurry mixture is not only mechanically binding and abrasive, but also chemically corrosive, leading to frequent failure of this outer bearing during use as well as considerable power loss as the result of friction at this outer bearing. Moreover, the tubular housing-shaft arrangement of the customary slurry stirrer is heavy and consequently difficult to manoeuvre. Furthermore, the tubular housing-shaft arrangement permits attachment of the impeller only at the relatively short portion of the shaft which protrudes from the outer end of the tubular housing and thus limits the size of the impeller and the position at which it may be attached. In addition, the tubular housing-shaft arrangement does not lend itself to easy changing of the impeller or replacement of the bearings. Neither can it be shortened or easily dismantled for transport.

I have now devised a new improved form of slurry stirrer which overcomes or at least diminishes the aforementioned disadvantages.

### Summary of the Invention

Accordingly this invention provides a slurry stirrer comprising a rotatable shaft having a first end adapted for linkage to a source of rotary power and a second end adapted for attachment of, and having attached thereto an impeller, the shaft being rotatably mounted only towards the first end thereof in a fixed housing, characterised in that the impeller means is a multi-blade impeller having two or more axially spaced sets of impeller blades.

The slurry stirrer of the invention may be used to stir solid/liquid slurries in general, characteristically in large scale applications, especially to stir agricultural waste slurries.

In use, the first end of the shaft is linked to a rotary power output, such as a rotary power output of a tractor, and the fixed housing may be attached to the hydraulic lifting mechanism of the tractor. With such an arrangement the second end of the shaft, with a suitable impeller attached thereto may be lowered and raised into and out of the slurry whilst avoiding bringing any bearings into contact with the slurry. The only bearings present between the shaft and the housing are located towards the first end of the shaft and thus advantageously are remote from the slurry during use and do not come into contact with the slurry. As a consequence the bearings do not fail as a result of being brought into contact with the slurry.

Also, I have found that the stirrer arrangement of the invention consumes considerably less power than the prior art slurry stirrer arrangement. Excessive power loss as a result of friction caused by slurry coming into contact with the bearings is obviated. For example, I have found that the prior art form of stirrer requires a power input of about 80 horsepower, whereas a comparable stirrer according to the invention requires only about 40 horsepower to do the same job.

Preferably the shaft of the stirrer of the invention is a tubular shaft. Such a tubular shaft has the advantage of strength coupled with relatively lower weight when compared with a solid shaft. The relatively lower weight of the tubular shafted stirrer makes it more manoeuvrable than heavier, prior art stirrers.

The first end of the shaft may have a splined end suitable for linkage to the rotary power output of a tractor. Also in preferred embodiments the shaft may comprise a releasable linkage towards the first end thereof for releasably disconnecting the shaft into two parts. For example, such a releasable linkage may be used to detach the outer part of the shaft from the power output linkage and/or housing for ease of transport and shaft exchange. By this means the shaft may be changed for one of longer or shorter length. For instance shafts of different lengths may be fitted to suit different conditions such as different sizes and shapes of slurry pit. Any suitable releasable linkage may be used.

Similarly the second end of the shaft may comprise an attachment for releasably attaching an impeller thereto. For example, the tubular shaft may comprise an end section at the second end thereof of square or other shaped, e.g. hexagonal, or triangular, cross section, such that an impeller having a tubular axial shaft of similar, larger, shaped cross section may be fitted to the tubular shaft of the stirrer. Such an impeller may be held in place by suitable pin and clip arrangements. Such an impeller attachment has the advantage that different sized and shaped impellers may be fitted easily and quickly to the stirrer shaft. A further advantage is that the impeller may be fitted at either specific locations or throughout the length of the shaped end section of the shaft as desired to satisfy differing stirring requirements. For example the releasable attachment permits fitting of impellers of different shape, size or design to suit variation of slurry conditions, e.g. viscosity of slurry, or horsepower sources or arrangements of slurry pit. Such a releasable attachment is particularly advantageous as it permits the attachment of multi-blade impellers, i.e. impellers having two or more sets of impeller blades, which may be separate impeller units or integral one with another. With such multi-blade impellers the power supplied to the stirrer is shared out between the two or more sets of impeller blades advantageously tending to decrease the occurrence of cavitation in the stirred material.

I have also devised particular improved impellers for use with stirrers.

Accordingly, in a particular embodiment this invention provides an improved impeller for use with a stirrer comprising two or more sets of impeller blades arranged such that in use rotation of the sets of blades produces thrust forces which are mutually opposing.

Preferably the mutually opposing thrust forces are such that they substantially cancel one another out. For example, two sets of impeller blades may be used having mutually opposed pitch angles. Such impeller arrangements advantageously diminish undesirable stresses and strains on the stirrer during use, which is particularly desirable in the case of tower stirrers for use with above ground slurry stores. With such tower stirrers the undesirable effects of thrust forces can be magnified by leverage effects acting over the length of the tower. The two or more set of blades of the impeller of this embodiment may be integral one with another or may be provided as separate units which are used together.

Also in particular embodiments the invention provides an improved impeller for use with a stirrer comprising at least one blade having integral therewith a circumferential flange.

Each set of impeller blades may have two or more, e.g. four blades and the flange is in the form of a circumferential ring around the tips of the impeller blades. The flange, particularly when in the form of a circumferential ring, serves to shield the impeller blades from damage, for instance if the impeller comes into contact with a solid surface during use, e.g. the concrete sides or floor of a slurry pit. Advantageously, the flange serves to capture the radial/centrifugal energy imparted to the stirred slurry by the stirrer and entrains solid masses, e.g. slurry crust, past the impeller blades and thereby increases comminution of large solid masses.

The radius of the circumferential flange of the impeller blade may be variable throughout its length. In one embodiment the radius of the flange diminishes from the leading edge of the blade towards the trailing edge of the blade. Alternatively the radius of the flange increases from the leading edge of the blade towards the trailing edge of the blade. This latter arrangement may advantageously assist in preventing the rotating impeller "digging into" solid surfaces which it comes into contact with during use. Generally I have found that stirrers having such flanged blades are particularly advantageous for stirring mixtures containing large solid masses, e.g. such as crusted slurry.

Most preferably, the leading edge of the impeller blade of these further embodiments is substantially flat in aspect, i.e. not circularly rounded or otherwise substantially convex in aspect. This substantially flat aspect of the leading edge of the blade assists in preventing large solid masses e.g. slurry crust, being deflected unbroken by the rotating impeller blade. The straight leading edge appears to exercise a "hooking" effect, trapping and drawing the solid lumps in towards the axis of rotation and breaking them up into smaller particles and giving rapid mixing of the slurry. Also the reduction in radial flow from the impeller caused by the flange decreases the fluid pressure behind the impeller causing solid masses, e.g. slurry crust, to be drawn in towards the impeller for mixing. Impellers according to both these embodiments may be used in multiple blade arrangements, in combination, and in opposed thrust arrangement.

The slurry stirrers of the invention may be used with above ground slurry stores, i.e. a store in the form of a tank having relatively high walls around at least part of the circumference thereof. Such above ground slurry stores require specialised equipment to enable introduction of the stirrer over the relatively high walls into the slurry and supply of power to the stirrer.

The customary form of slurry stirrer for above ground stores, known as a tower stirrer, has a frame and tower or mast which is attached to the hydraulic lifting mechanism on a tractor. The rotary power output of the tractor passes via a shaft to a gearbox at the bottom of the tower and from thence up the tower via a further shaft to a fixed second gearbox at the top of the tower. This second gearbox drives an impeller, in the slurry, on the end of a shaft mounted within a tube assembly. Two universal joints are required between the second gearbox and the tube/shaft assembly which bears the impeller to facilitate manoeuvre of the tube/shaft assembly into and out of the slurry.

### Description of the Drawings

The invention is now further described by way of illustration only with reference to the accompanying diagrammatic figures in which:
Figure 1A shows a side view of the fixed housing in which the stirrer shaft is rotatably mounted;
Figure 1B shows a side view of the rotatable tubular shaft;
Figure 1C shows a side view in part vertical section of a modified rotatable shaft having a releasable linkage for attachment/detachment of the outer portion of the shaft;
Figure 1D shows a side view in part vertical section of the outer end of the rotatable tubular shaft with a square cross-section tubular end for attachment of an impeller;
Figure 1E shows an end view of the square cross-section tubular end of Figure 1D;
Figure 1F shows the end of view of Figure 1E in enlarged scale with the square cross-section tubular shaft of an impeller attached thereto;
Figure 2A shows an end elevation view of one form of impeller for use with the stirrer of Figure 1;
Figure 2B shows an angled elevation view of an alternative form of impeller for use with the stirrer of Figure 1;
Figure 2C shows an end elevation view of a combination impeller comprising impellers as in Figure 2A and 2B;
Figure 2D shows a side elevation view of the combination impeller of Figure 2C;
Figure 3 shows a side elevation, part vertical section view of one form of slurry stirrer tower for use with above ground slurry stores.

### Description of the Specific Embodiments

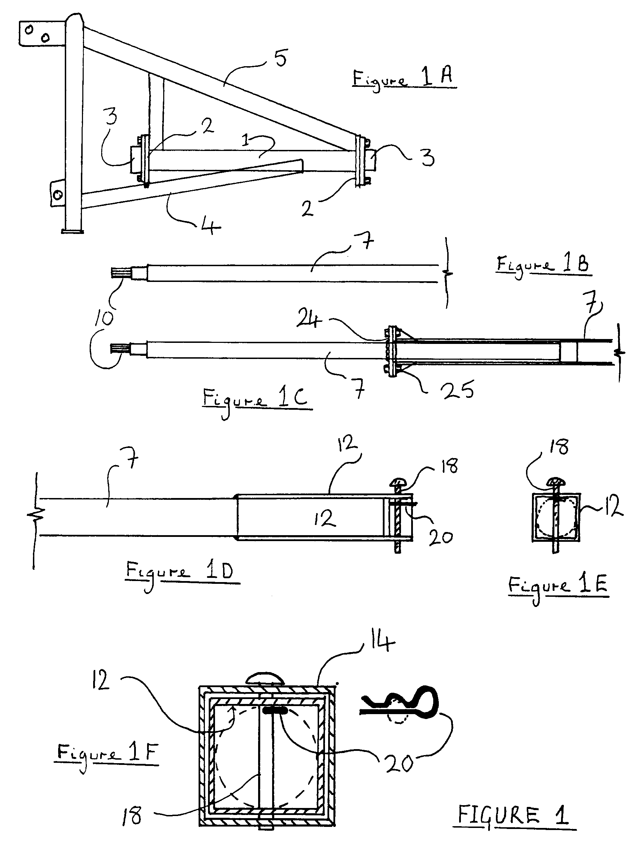

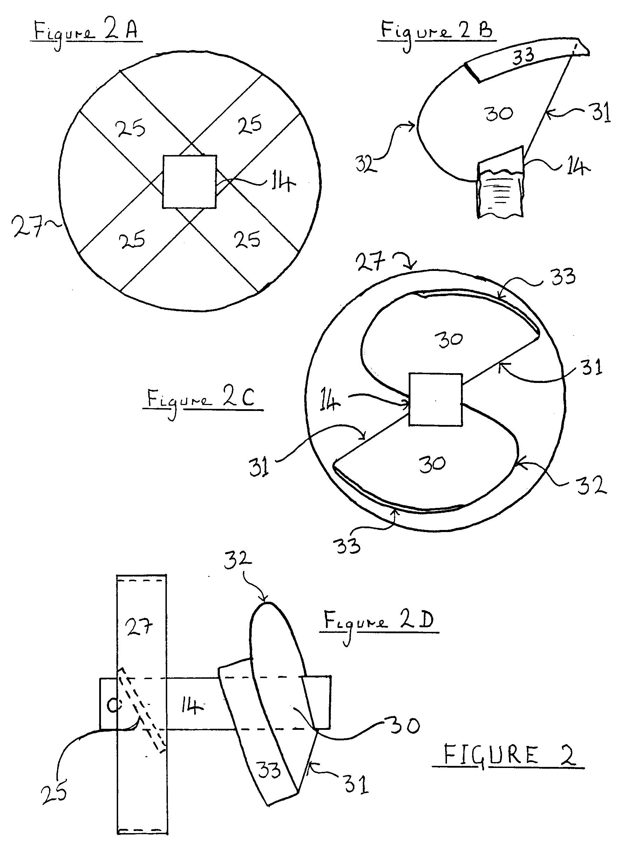

With reference to the accompanying diagrams, a slurry stirrer according to the invention comprises a fixed housing, as shown at Figure 1A, having a tubular shaft, as shown at Figure 1B or 1C, rotatably mounted therein.

The fixed housing comprises a metal tube 1 having flanges 2 welded at either end thereof, to which rotary bearing 3 are bolted. The tube 1 has struts 4 and 5 attached thereto for attachment of the housing to the three point hydraulic lifting mechanism of a tractor. There are two struts 4, only one of which is showing in the diagram.

The tubular metal shaft 7, as shown at Figure 1B or 1C, is rotatably mounted within the tube 1 by inner bearing journals (not shown) within the bearings 3. The inner end of the shaft 7 has a splined boss 10 for attachment to the power output of a tractor.

The outer end of the shaft 7, as shown at Figure 1D, E and F has a square cross-section tubular metal end section 12 welded thereto for attachments of a metal impeller 14, (shown without impeller blades in Figure 1F). The impeller is in the form of a square cross-section tubular metal shaft 14 to which the impeller blades (not shown in Figure 1F) are integrally welded. The square tubular shaft 14 is of internal cross-section dimensions slightly larger than the external cross-sectional dimensions of the square tubular end section 12, to permit the impeller 14 to be push fitted to the shaft 7. The impeller 14 is located on the shaft by locating pin 18 which passes through bore holes provided in tubes 12 and 14 and is locked in place by locking clip 20 (shown in enlarged detail alongside Figure 1F).

One form of releasable linkage for linking the outer end portion of the shaft 7 to the inner driven end portion thereof is shown at Figure 1C. Both portions of shaft 7 are provided with flanges 24 and 25 which are bolted together, the outer end of the driven end portion having a soft bush 27 which locates within the tubular shaft 7.

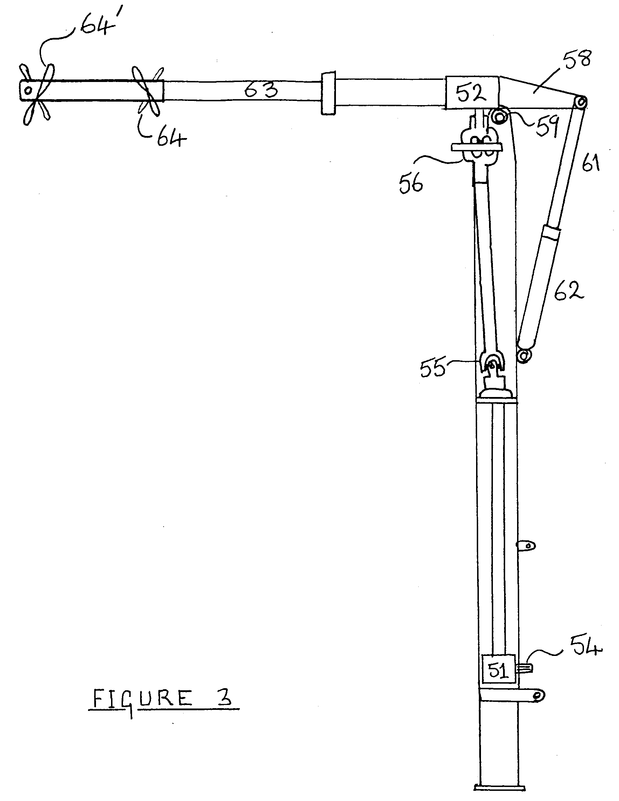

With reference to Figure 2, two alternative forms of impeller are shown at Figures 2A and 2B and a combination impeller incorporating both forms of impeller is shown at Figures 2C and 2D.

All of the impellers shown in Figure 2 are mounted on a square metal tubular shaft 14 which is of internal cross-section slightly larger than the external cross-section of the square tubular end Section 12 of the impeller shaft 7 to permit push fitting and locating thereto as described above.

With reference to Figure 2A one form of impeller comprises such a tubular shaft 14 having oblong metal blades 25 welded radially thereto at 90° intervals. The faces of the blades 25 are angled at about 60° to the axis of the tubular shaft 14 and have an annular, circumferential metal ring 27 welded around their outer ends. The impeller may be located on a tubular stirrer shaft 7 as described above. In use the circumferential ring 27 protects the blades 25 from damage should the impeller come into contact with solid surface, such as the concrete bottom or walls of a slurry pit. Also the circumferential ring 27 serves to capture the radial/centrifugal energy imparted to the slurry by the impeller and entrains slurry crust past the impeller blades causing the crust to be broken up into small particles.

With reference to Figure 2B, an alternative form of impeller comprises a similar tubular shaft 14 having two blades 30 (only one of which is shown in Figure 2B) welded at an angle of about 60° to the axis thereof. The blades 30 have substantially straight radial leading edges 31 and rounded trailing edges and circumferential flanges 33 welded around part of the circumference of the blades 30. In view of the overall shape of the blades 30, the radius of the circumferential flanges 33 decreases from the leading edge of the blades towards the trailing edges of the blades. Similarly this impeller may be fitted to and located on the square tubular shaft end 12 of a stirrer shaft 7 as described above. In use, the straight radial leading edges of the blades 30 assist by a "hooking" effect in preventing slurry crust being deflected unbroken by the rotating blades. Also, the use, the flanges 33 appear to trap and draw slurry crust in towards the axis of rotation and break up the crust into small particles. Also generally with both types of impeller described above the circumferential ring 27 and flanges 33 tend to reduce radial flow from the impeller, decreasing fluid pressure behind the impeller causing slurry crust to be drawn towards the axis of the impeller for more efficient mixing.

With reference to Figures 2C and 2D, a combination impeller comprises impeller arrangements as shown in Figures 2A and 2B and described above mounted on a common tubular shaft 14. In the arrangement shown in Figure 2D the two sets of blades 25 and 30 are set at similar, substantially parallel pitch angle. In a alternative arrangement (not shown) the two sets of blades 25 and 30 may be set at opposed pitch angles such that they produced mutually opposed thrusts on rotation which advantageously, at least in part, cancel one another out. In a still yet further arrangement (not shown) two or more separate impellers, including any combination of those shown in Figure 2, may be mounted on a stirrer shaft 7 such that they produce mutually opposed thrusts. Such mutually opposed thrust arrangements are particularly advantageous for use with tower stirrers to decrease undesirable stresses and strains on the stirrer. Also such multiple impeller (multiple blade) arrangements, whether in common or opposed thrust arrangement, tend to decrease the occurrence of cavitation in the stirred slurry by spreading the power output of the stirrer across all of the impellers.

In use, an impeller as shown at Figure 2A is preferably mounted towards the outer end of the stirrer to protect the stirrer and impeller blades against damage by chance collision with hard solid surfaces.

With reference to Figure 3, a tower slurry stirrer comprises a tower 50 having a stirrer shaft 63 on which are mounted impeller blades 64 and 64' which have mutually opposed pitch angles.

It will be appreciated that the present invention has been described above purely by way of illustration and that variations and modifications can be made within the scope of the invention.

## Claims

1. A slurry stirrer comprising a rotatable shaft having a first end adapted for linkage to a source of rotary power and a second end adapted for attachment of, and having attached thereto an impeller, the shaft being rotatably mounted only towards the first end thereof in a fixed housing, characterised in that the impeller means is a multi-blade impeller having two or more axially spaced sets of impeller blades.

2. A stirrer according to Claim 1 in which the rotatable shaft is tubular.

3. A stirrer according to Claim 1 or 2, in which the first end of the shaft has a splined end suitable for linkage to the rotary power output of a tractor.

4. A stirrer according to any of the preceding claims in which the shaft comprises a releasable linkage towards the first end thereof for releasably disconnecting the shaft into two parts.

5. A stirrer according to any of the preceding claims in which the impeller is releasably attached to the second end of the shaft.

6. A stirrer according to Claim 5, in which the shaft is tubular and comprises an end section at the second end thereof of shaped cross-section and the impeller has a tubular axial shaft of similar, larger, shaped cross-section whereby the impeller is fitted to the tubular shaft of the stirrer.

7. A stirrer according to any of the preceding claims in which the impeller comprises two or more sets of impeller blades arranged such that in use rotation of the sets of blades produces thrust forces which are mutually opposed.

8. A stirrer according to any of the preceding claims in which each impeller blade has integral therewith a circumferential flange.

9. A stirrer according to Claim 8 in which the radius of the circumferential flange is variable throughout its length.

10. A stirrer according to any of the preceding claims in which the leading edge of each impeller blade is substantially flat in aspect.

## Patentansprüche

1. Ein Schlammrührgerät bestehend aus einer drehbaren Welle, deren erstes Ende für die Befestigung an einer Drehkraftquelle ausgerüstet ist, und deren zweites Ende für die Befestigung eines Flügelrades ausgerüstet ist und an dem ein Flügelrad befestigt ist, wobei die Welle nur beim ersten Ende davon drehbar an einem unbeweglichen Largerkörper montiert ist, dadurch gekennzeichnet, dass das Flügelrad ein mehrflügeliges Flügelrad ist, das zwei oder mehere Sätze Flügelradflügeln in einen axialen Abstand zueinander besitzt.

2. Ein Rührgerät nach Anspruch 1, worin die drehbare Welle röhrenförmig ist.

3. Ein Rührgerät nach Anspruch 1 oder 2, worin das erste Ende der Welle herbgezalmt und geeignet für die Befestigung an einer Drehkraftquelle eines Traktors ist.

4. Ein Rührgerät nach einem der vorangehenden Ansprüche, worin die Welle eine lösbare Befetigung am ersten Ende aufweist, um die Welle in zwei Teilen abzuspannen.

5. Ein Rührgerät nach einem der vorangehenden Ansprüche, worin das Flügelrad am zweiten Ende der Welle abspannbar befestigt ist.

6. Ein Rührgerät nach Anspruch 5, worin die Welle röhrenförmig ist und am zweiten Ende einen profilierten Querschnitt hat und das Flügelrad eine röhrenförmige Achsenwelle gleichartiger Profilierung mit zu grosseren Querschnitt hat, wobei das Flügelrad auf die röhrenförmige Welle des Rührgerätes angepasst ist.

7. Ein Rührgerät nach einem der vorangehenden Ansprüche, wobei das Flügelrad aus zwei oder meheren Sätze von Flügelradflügeln besteht, die so angeordnet sind dass bei der Benützung die Drehung der Flügelradsätze gegeneinander gerichtete Schubkräfte erzengt.

8. Ein Rührgerät nach einem der vorangehenden Ansprüche, worin jeder Flügelradflügel in Einheit einen umlaufenden Spurkranz hat.

9. Ein Rührgerät nach Anspruch 8, worin der Radius des umlaufenden Spurkranzes überall in seiner Länge veränderlich ist.

10. Ein Rührgerät nach einem der vorangehenden Ansprüche, worin die Vorderkante jedes Flügelradflügels im wesentlichen ein wölbungsfreies Aussehen hat.

## Revendications

1. Un mélangeur de lisier comprenant un arbre rotatif dont la première extrémité assure une liaison mécanique avec une source de puissance rotative externe et la deuxième est prévue pour recevoir, et comporte effectivement, un agitateur.L'arbre n'est monté sur un palier permettant sa rotation que vers la première extrémité. L'agitateur multi-pales comporte au moins deux jeux de pales réparties selon l'axe de rotation.

2. Un mélangeur du type décrit en 1 ci-dessus dans lequel l'arbre rotatif est tubulaire.

3. Un mélangeur du type 1 ou 2, dans lequel la forme de la première extrémité de l'arbre est adaptée à une liaison mécanique avec l'entraîneur rotatif d'un tracteur.

4. Un mélangeur de tous les types précédents dans lequel l'arbre comporte vers sa première extrémité une liaison amovible permettant de le démonter en deux parties.

5. Un mélangeur de tous les types précédents dans lequel l'agitateur peut être séparé de la deuxième extrémité de l'arbre.

6. Un mélangeur du type décrit en 5 ci-dessus, dans lequel l'arbre est tubulaire, sa section terminale à la deuxième extrémité ayant une forme spécifique et l'agitateur comportant similairement un arbre tubulaire de section plus importante dont la forme s'adapte à l'arbre du mélangeur permettant de relier l'un à l'autre.

7. Un mélangeur de tous les types précédents dans lequel l'agitateur comprend deux jeux ou plus de pales, montées de manière à produire en rotation des flux mutuellement opposés.

8. Un mélangeur de tous les types précédents dans lequel chaque pale de l'agitateur comporte à sa circonférence une collerette qui en fait partie intégrante.

9. Un mélangeur du type 8 ci-dessus dans lequel le rayon de la collerette est variable sur toute sa longueur.

10. Un mélangeur de tous les types précédents dans lequel le bord d'attaque de chaque pale de l'agitateur présente un aspect essentiellement plan.
